# EUROPEAN PATENT SPECIFICATION

(11) **EP 2 658 383 B1**
(45) Date of publication and mention of the grant of the patent: **26.04.2017**
(21) Application number: 11805857.7
(22) Date of filing: 23.12.2011
(51) Int. Cl.: A21D 2/36, A23D 7/005, A23D 7/04, A21D 2/16, A21D 2/26

(54) **USE OF ENCAPSULATED OIL IN DOUGH PREPARATION**
VERWENDUNG VON EINGEKAPSELTEM ÖL IN DER TEIGZUBEREITUNG
UTILISATION D'HUILE ENCAPSULÉE DANS LA PRÉPARATION D'UNE PÂTE

(30) Priority: 29.12.2010 EP 10197247
(43) Date of publication of application: 06.11.2013
(73) Proprietor: Nestec S.A., 1800 Vevey (CH)
(72) Inventor: ARFSTEN, Judith, CH-1752 Villars-sur-Glâne (CH); BETZ, Reinhold, 78244 Gottmadingen (DE); MEZZENGA, Raffaele, CH-8053 Zürich (CH); ULRICH, Stephane, CH-1009 Pully (CH); SAVIN, Gabriela, F-14100 Lisieux (FR); VALLES PAMIES, Baltasar, I-52037 Sansepolcro (IT)
(74) Representative: Mollet, Beat Max
(86) International application number: PCT/EP2011/073952
(87) International publication number: WO 2012/089666

(56) References cited:
- EP-A1- 2 191 730
- WO-A1-96/32017
- WO-A2-2008/066380
- US-A- 5 759 599

## Description

### FIELD OF THE INVENTION

The invention concerns the use of encapsulated oils and bakery dough low in saturated fatty acids prepared with the encapsulated oils as fat replacement systems. The dough can be used for the preparation of bakery products such as cookies, pies, croissants, puff pastry, wafers, loaves, biscuits, bread, sandwich doughs, and pizza doughs etc.

The dough products related to the invention comprise encapsulated oils, optionally fat, water, flour, optionally eggs, and optionally a leavening agent, as main ingredients.

### BACKGROUND

A common characteristic of different dough types is that the type of fat strongly governs the texture and organoleptic properties of the unbaked dough as well as the baked product. Bakery doughs are usually prepared with solid-type fats such as lard, butter, margarine, palm-based fats, hydrogenated vegetable oils, or high melting stearin fractions of vegetable oils.

The hardness of a fat is linked to its degree of saturation. Highly saturated fats are usually solid at ambient conditions. Low levels of saturation yield a liquid product at ambient conditions, e.g. sunflower oil.

Solid fats containing high amounts of saturated fatty acids (SFA) are known to have negative health effects and are linked to an enhanced risk of cardiovascular diseases. In the recent years, this has led to an increasingly negative consumer perception of saturated fats.

Hydrogenation of oil is a commonly used technique to obtain solid-type fats from liquid oils. Besides the resulting high SFA content, the presence of trans fatty acids in partially hydrogenated fats has become a major health issue. Trans fatty acids are associated with cardiovascular diseases as well as with an increased risk of diabetes and some types of cancer, such as breast cancer.

Hence, it would be desirable to replace high SFA solid-type fats or hydrogenated fats containing significant levels of trans fatty acids with low SFA liquid oils. However, persons skilled in the art understand that in most cases of dough preparation it is not possible to use a liquid oil instead of a solid fat. Besides other technological drawbacks, liquid oil doughs usually have a poor dough texture. The doughs are much softer and stickier resulting in unworkable and unprocessable doughs. Oil release during manufacturing and dough storage also occurs.

Thus, there is a high demand for low SFA fats that can replace high SFA solid fats while still providing sufficient dough texture and workability.

WO 1994/019953 describes bakery doughs or batters comprising conventional ingredients where the fat used has a SFA content of less than 40 wt. %. The fats that can be used are obtained from chemical or emzymatic interesterification, optionally followed by fractionation of a hardened fat and/or a liquid oil.

WO 2008/150169 describes a method of preparing biscuits or crackers using a fat blend which is characterized by a solid fat content of less than 10 wt. % at 25 °C. The inventors found that despite the high level of unsaturated fatty acids in the fat blend it can be used to prepare a biscuit dough or a cracker dough that does not suffer from stickiness.

In these documents SFA reduction is achieved using a low SFA fat blend usually containing a crystallizing or structuring agent such as a hydrogenated fat or a highly saturated fat fraction.

An object of the present invention is therefore to provide a dough for baking that goes at least part way to overcoming one or more of the above disadvantages of existing doughs, or at least provides a useful alternative.

### SUMMARY OF THE INVENTION

In a first aspect, the invention provides the use of encapsulated oil for the preparation of a dough, the encapsulated oil comprising an inner core of oil encapsulated in an outer shell of cross-linked protein, wherein the encapsulated oil comprises at least 80 % by weight oil, and wherein the dough is formed by mixing 0.5 to 40 % by weight of the encapsulated oil with other ingredients. The encapsulated oil is oil cream.

In some preferred embodiments of the invention, the other ingredients comprise fat, water, and flour. The other ingredients may further comprise egg, a leavening agent, salt and sugar.

Preferably, the oil is a food grade oil obtained from plants or animals. Preferred oils include, but are not limited to, olive oil, safflower oil, sunflower oil, fish oil, soy bean oil, soy oil, palm kernel oil, palm oil, coconut oil, hazelnut oil, flaxseed oil, rapeseed oil, primrose oil, linseed oil, corn oil, algae oil, cottonseed oil, essential oils, and any combination thereof. The oil may also contain at least one liposoluble compound selected from the group consisting of plant polyphenols, plant sterols, carotenoids, fatty acids, vitamins, aromas, antioxidants, and active ingredients.

The protein is preferably selected from the group consisting of whey protein, caseinate, egg albumen, lyzozyme, soy proteins, gluten, rice proteins, corn proteins, potato proteins, pea proteins, any kind of globular or random coil proteins, and any combination thereof. The protein may also comprises a food-grade salt selected from the group comprising sodium citrate, magnesium citrate, potassium citrate, calcium, phosphate, and any combination thereof.

Preferably, the encapsulated oil capsules have an average size in the range of about 0.1-100 µm.

In a second aspect, the invention provides a dough comprising:
a) 0.5 to 40 % of an encapsulated oil comprising an inner core of oil encapsulated in an outer shell of cross-linked protein, wherein the encapsulated oil comprises at least 80 % by weight oil;
b) 0.5 and 40 % fat;
c) 4.5and 35 % water; and
d) 30 and 65 % flour.

The dough may further comprises 0.1 to 2 % leavening agent, 0.1 to 10 % egg, and 0.1 to 40 % sugar or 0.1 to 10 % salt. In some preferred embodiments, the dough comprises 10 to 20 % oil, 5 to 15 % fat, 32 to 37 % flour, and 8 to 12 % water, and may further comprise 0.5 % leavening agent, 1.5 % egg, and 35 % flour.

Preferably, the dough is selected from the group consisting of cookie dough, pie dough, croissant dough, puff pastry dough, wafer dough, loaf dough, biscuit dough, and pizza dough.

In another aspect, the invention provides a baked product which has been prepared using the dough of the invention.

In a further aspect, the invention provides an oil cream comprising at least 60 % oil by weight, a maximum content of water of 40 %, and cross-linked protein, wherein the oil is encapsulated oil comprising an inner core of oil encapsulated in an outer shell of cross-linked protein.

The invention also provides a process for the preparation of the oil cream, comprising the steps:
a) preparing an emulsion by homogenization of oil in an aqueous protein solution;
b) cross-linking the protein by heating the emulsion at 70 to 90 °C for 5 to 15 minutes;
c) concentrating the emulsion by microfiltration or centrifugation or evaporation to reduce the water content of the oil cream to less than 35 % by weight.

### BRIEF DESCRIPTION OF THE FIGURES

Figure 1 shows photos of a reference short crust dough containing chocolate morsels prepared with solid fat (top photo), liquid sunflower oil (center photo) and 60 % of the solid fat replaced by spray dried oil powder (bottom photo).
Figure 2 is a graph showing relative hardness of doughs of the invention.
Figure 3 is a graph showing the degree of oil release of doughs of the invention.
Figure 4 is a graph showing the hardness of biscuits prepared from doughs of the invention.

### DETAILED DESCRIPTION

The invention provides a new route to obtain a low SFA lipid based dough. In contrast to approaches of the prior art, the invention does not rely on blending different fats or fat fractions or on crystallizing liquid oils.

The applicant has found that encapsulated liquid vegetable oils can be used to replace (partially or completely) the solid fat in doughs. The resulting dough is characterized by a solid dough texture. The doughs do not display any stickiness and are workable. Their tendency to release oil is reduced compared to a dough prepared with liquid oil. The invention concerns the use of encapsulated oil obtained by an emulsification process. The encapsulated oil comprises an inner core of oil encapsulated in an outer shell of cross-linked protein, wherein the encapsulated oil comprises at least 80 % by weight oil, and wherein the dough is formed by mixing 0.5 to 40 % by weight of the encapsulated oil with other.

The encapsulated oils are obtained by known emulsion-based encapsulation technology. The process is based on an oil-in-water emulsion that is dried or concentrated to obtain an encapsulated oil. The encapsulated oil is an oil cream. The drying/concentrating step can be carried out by any commonly known drying/concentrating technique such as air drying, ventilation, spray drying, drum drying, freeze drying, vacuum drying, microfiltration, centrifugation etc. Prior to the drying/concentrating step, a step of cross-linking a protein-based emulsifier is preferred. This may be a physical treatment, such as heat treatment or high pressure treatment, a chemical treatment, or an enzymatic treatment. The final encapsulated oil usually consists of a liquid vegetable oil that is encapsulated in a matrix material consisting of proteins, and optionally carbohydrates (such as sugars, for instance lactose, glucose, maltodextrin, a starch, cellulose), and optionally further surface active agents, or mixtures thereof. Depending on the drying/concentrating step employed, residual water may be present. For example, a spray dried product will commonly have a moisture content of < 1 %, whereas a microfiltered product will have a moisture content of up to 10-50 %. Using a concentrated product with a high moisture content requires an equivalent reduction in the amount of water present in the dough recipe. In each case the encapsulation procedure transfers the liquid oil into a solid state. This may be a powdery state when, for example, spray drying is applied or a creamy-like texture when, for example, microfiltration is applied. Thus, the encapsulation process can be regarded as an oil thickening or oil structuring process.

The oil used for preparing the emulsion might be any vegetable oil or fat that is liquid or that can be liquified at ambient conditions. The oil may comprise organic oils (oils produced by plants or animals), in particular food grade oils. Examples are sunflower oil, rapeseed oil, olive oil, soy oil, fish oil, linseed oil, soybean oil, hazelnut oil, flaxseed oil, primrose oil, essential oils, safflower oil, corn oil, algae oil, cottonseed oil, palm oil, palm kernel oil, coconut oil, and combinations thereof. The oil may contain a liposoluble compound, such as for example plant polyphenols, fatty acids, such as n-3 fatty acids, n-6 fatty acids, vitamins, aromas, antioxidants, active ingredients. Preferred antioxidants include ascorbic acid, ascorbyl palmitate, citric acid, rosmarin extract, BHA, BHT, mixed tocopherol, and EDTA.

Preferably, an oil with a low SFA content is chosen such as high oleic sunflower oil, sunflower oil, high oleic rapeseed oil, rapeseed oil, or soy oil.

The emulsifier used is preferably a protein-based emulsifier such as whey proteins, soy proteins, pea proteins, caseinate, egg albumen, lyzozyme, gluten, rice protein, corn protein, potato protein, pea protein, skimmed milk proteins or any kind of globular and random coil proteins as well as combinations thereof. The proteins may comprise food grade salts, such as sodium citrate, magnesium citrate, potassium citrate, calcium phosphate or combinations thereof.

In the case of oil powder or oil flakes, free flow agents or anti-cake agents may be added to the powder or flakes to improve flowability. Examples include tricalcium phosphate, sodium bicarbonate, sodium silicate, silicon dioxide, calcium silicate, magnesium trisilicate, talcum powder, aluminium silicate, stearic acid, polydimethylsiloxane, starch, sugars, and maltodextrins.

Emulsion based processes to obtain encapsulated oils are described in various scientific publications and review articles such as:
Mary Ann Augustin, Luz Sanguansri, and Christine M. Olivier, "Functional properties of milk constituents: Application for microencapsulation of oils in spray-dried emulsions - A minireview," Dairy Sci. Technol., 90, 137 (2009).
Adem Gharsallaoui, et al., "Applications of spray-drying in microencapsulation of food ingredients: An overview," Food Research International, 40, 1107 (2007).
R. Mezzenga and S. Ulrich, "Spray-Dried Oil Powder with Ultrahigh Oil Content", Langmuir, 26 (22), 16658, (2010).
Alexandre I. Romoscanu and Raffaele Mezzanga, "Cross linking and rheological characterization of adsorbed protein layers at the oil-water interface," Langmuir, 21 (21), 9689 (2005).
Cesar Vega and Y. H. Roos, "Invited Review: Spray-Dried Dairy and Dairy-Like Emulsions-Compositional Considerations," Journal of Dairy Science, 89 (2), 383 (2006).

Patent documents disclosing such encapsulated oils or the process of obtaining such encapsulated oils include EP 1998627, EP 2191730, US 2010/0074986.

Typical solid fat replacement ratios are between 0.1 % and 100 %, preferably between 15 % and 60 %. Possible replacement ratios strongly depend on the dough recipe used and the desired product functionalities. For higher replacement ratios the doughs might become softer compared to a reference dough prepared with a solid fat. However, even at 100 % replacement of solid fat by encapsulated oil the dough texture is significantly improved compared to a dough prepared with a liquid oil.

One beneficial feature of the invention is the flexibility of the approach in terms of ingredients. The invention is not related to particular fat fractions or crystallizing agents. Any type of oil with a desired degree of saturation can be used. In doing so, a lipid ingredient with an SFA content as low as that of a high oleic sunflower oil (about 8 % w/w SFA) can be obtained.

According to the invention, in the preparation of the dough, an amount of 0.5 to 40 % of the oil cream is mixed with other ingredients. The ingredients comprise optionally fat, water and flour. As mentioned above, the replacement of fat by the encapsulated oil can be between 0.1 and 100 %, preferably between 15 and 60 %. The ingredients can also include egg, a leavening agent and sugar. It is also possible to prepare a savoury dough, for example where the sugar is replaced by salt, such as in an amount of 0.1 to 10 %.

According to the invention, the encapsulated oil capsules have an average size in the range of about 0.1 to 100 microns. A powder particle or an oil flake is formed by a multiplicity of these oil capsules. For the oil cream, the oil capsules dispersed in the continuous aqueous phase.

The invention further relates to a dough produced with the oil cream, comprising between 0.5 to 40 % of this ingredient, between 0.5 and 40 % of fat, between 4.5 and 35 % of water and between 30 and 65 % of flour

The term "dough" means any type of dough obtained from a mixture of flour, water and encapsulated oil/fat, with or without any further ingredient, including, for example, dough obtained using a leavening agent (yeast or with baking powder), such as pizza dough, cookie dough, pie dough, croissant dough, puff pastry dough, wafer dough, loaf dough, biscuit dough, and any further dough known by the person skilled in the art.

In the dough of the invention, the amount of leavening agent preferably comprises between 0.1 and 2 %, the amount of egg between 0.1 and 10 % and the amount of sugar between 0.1 and 40 %.

In a preferred embodiment of the invention, the dough comprises from 10 to 20 % of oil cream, from 5 to 15 % of fat, from 32 to 37 % of flour and from 8 to 12 % of water. The amount of leavening agent may be around 0.5 %, the amount of egg around 1.5 % and the amount of flour around 35 %.

The dough of the invention may also contain chocolate pieces, as well as nuts, fruit or any other added food grade components known in the art.

The invention further relates to the above mentioned oil cream comprising at least 60 % of oil in weight based on the final oil cream, a maximum water content of 40 %, the remaining being the cross linked protein. The type of oil used as well as the protein used are the same as mentioned above.

The invention also relates to a process for the preparation of an oil cream, wherein an emulsion is prepared by homogenization of oil with a protein, the protein is denaturated and cross-linked by a physical treatment, such as heat treatment or high pressure treatment, a chemical treatment or an enzymatic treatment. Preferably, the emulsion is heat treated at around 80 °C for around 10 min. and cooled. The emulsion is preferably concentrated by microfiltration or centrifugation or water evaporation to a residual water content of up to 40 %.

The invention also relates to a baked product obtained from the above mentioned dough. The baked product may be prepared using any type of baking including conventional oven baking, microwave baking, or any other type of baking known in the art.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

### EXAMPLES

The invention is further described with reference to the following examples.

### General Procedures

Short crust doughs according to the invention were compared with a reference dough (prepared with a solid fat) and with a dough prepared with liquid oil. Characteristics such as dough texture and oil leakage were determined. Three types of encapsulated oils dried or concentrated by different means were used for the preparation of the doughs. The ingredients were based on an oil-in-water emulsion which is heat treated.

*Emulsion preparation:* Sunflower oil was emulsified in an aqueous solution of WPI (whey protein isolate). The final emulsion contained 20 % (w/w) of sunflower oil. The emulsification was carried out using a high pressure homogenizer. The parameters were adapted to reach an oil droplet size between 0.5 microns and 5 microns.

*Thermal cross-linking:* The emulsion was heat treated at 80 °C for 10 min to achieve cross-linking of the protein layer which surrounds the oil droplets in the emulsion. The cross-linked emulsion was then cooled to ambient temperature.

*Spray dried oil powder:* The emulsion was spray dried using a classical spray dryer. The following parameters were chosen: atomization by a spraying disc, throughput 10 l/h, inlet temperature 105 °C, outlet temperature 65 °C. The product obtained was a powder with a moisture content of < 1 % (w/w), an oil content of about 95 % (w/w) and a protein content of about 4 % (w/w).

*Freeze dried oil flakes:* The emulsion was freeze dried using a classical freeze dryer. The following parameters are chosen for freeze drying: freezing at - 42 °C and 0.2 mbar, primary drying up to 0 °C at 0.2 mbar, secondary drying up to 20 °C down to 0.003 mbar. The product obtained was flaky with a moisture content of < 1 % (w/w), an oil content of about 95 % (w/w) and a protein content of about 4 % (w/w).

*Microfiltered oil cream:* The emulsion was concentrated by cross-flow microfiltration. The device used has a channel module with seven filter elements with a hydraulic diameter of 6 mm and a pore size of 0.2 µm. The product obtained had a creamy-type texture with a moisture content of about 25 % (w/w), an oil content of about 72 % (w/w) and a protein content of about 3 % (w/w).

Further details of the preparation procedure for the oil powder can be found in EP 2191730.

### Example 1: Recipe preparation procedure for short crust dough (reference)

| | % (w/w) |
|---|---|
| Water | 8 |
| Baking Powder | 0.5 |
| Flour | 35 |
| Sugar | 30 |
| Egg Powder | 1.5 |
| Shortening | 25 |

The shortening was creamed with the sugar. After the creaming step all other ingredients were mixed into the dough. Mixing was continued until a homogenous dough was obtained.

### Example 2: Recipe preparation procedure for low SFA liquid oil short crust dough (60 % shortening replacement)

| | % (w/w) |
|---|---|
| Water | 8 |
| Baking Powder | 0.5 |
| Flour | 35 |
| Sugar | 30 |
| Egg Powder | 1.5 |
| Shortening | 10 |
| Liquid oil | 15 |

The shortening and the liquid oil were creamed with the sugar. After the creaming step all other ingredients were mixed into the dough. Mixing was continued until a homogenous dough was obtained.

### Comparative Example 3: Recipe preparation procedure for low SFA short crust dough using spray dried oil powder (60 % shortening replacement)

| | % (w/w) |
|---|---|
| Water | 8 |
| Baking Powder | 0.5 |
| Flour | 35 |
| Sugar | 30 |
| Egg Powder | 1.5 |
| Shortening | 10 |
| Oil powder | 15 |

The shortening and the oil powder were creamed with the sugar. After the creaming step all other ingredients were mixed into the dough. Mixing was continued until a homogenous dough was obtained.

### Comparative Example 4: Recipe preparation procedure for low SFA short crust dough using freeze dried oil flakes (60 % shortening replacement)

| | % (w/w) |
|---|---|
| Water | 8 |
| Baking Powder | 0.5 |
| Flour | 35 |
| Sugar | 30 |
| Egg Powder | 1.5 |
| Shortening | 10 |
| Oil flakes | 15 |

The shortening and the oil flakes were creamed with the sugar. After the creaming step all other ingredients are mixed into the dough. Mixing was continued until a homogenous dough was obtained.

### Example 5: Recipe preparation procedure for low SFA short crust dough using microfiltered oil cream (60 % shortening replacement)

| | % (w/w) |
|---|---|
| Water | 3 |
| Baking Powder | 0.5 |
| Flour | 35 |
| Sugar | 30 |
| Egg Powder | 1.5 |
| Shortening | 10 |
| Oil cream | 20 |

The shortening and the oil cream were creamed with the sugar. After the creaming step all other ingredients were mixed into the dough. Mixing was continued until a homogenous dough was obtained. The moisture content of the oil cream (of about 25 %) was compensated by a corresponding reduction of the water content in the dough recipe.

### Example 6: Recipe preparation procedure for biscuit white dough (reference)

| | % (w/w) |
|---|---|
| Water | 7 |
| Baking powder | 1 |
| Flour | 58 |
| Starch | 2 |
| Sugar | 18 |
| Solid fat | 13.5 |
| Emulsifier | 0.5 |

The fat, water, and emulsifier are creamed with the sugar and baking powder. After the creaming step all others ingredients are mixed into the dough. Mixing is continued until a homogenous, consistent biscuit dough was obtained.

### Comparative Example 7: Recipe preparation procedure for low SFA biscuit white dough using spray dried oil powder

| | % (w/w) |
|---|---|
| Water | 7 |
| Baking powder | 1 |
| Flour | 58 |
| Starch | 2 |
| Sugar | 18 |
| Solid fat | 6.5 |
| Emulsifier | 0.5 |
| Oil powder | 7 |

The fat, water, emulsifier and the oil powder were creamed with the sugar and baking powder. After the creaming step all other ingredients were mixed into the dough. Mixing was continued until a homogenous, consistent biscuit dough was obtained.

### Comparative Example 8: Recipe preparation procedure for low SFA biscuit cocoa dough using spray dried oil powder

| | % (w/w) |
|---|---|
| Water | 7 |
| Baking powder | 1 |
| Flour | 57 |
| Starch | 2 |
| Sugar | 14 |
| Cocoa powder | 4 |
| Solid fat | 9.6 |
| Emulsifier | 0.4 |
| Oil powder | 5 |

The fat, water, emulsifier and the oil powder were creamed with the sugar, cocoa and baking powder. After the creaming step all other ingredients were mixed into the dough. Mixing was continued until a homogenous, consistent biscuit dough was obtained.

### Example 9: Texture

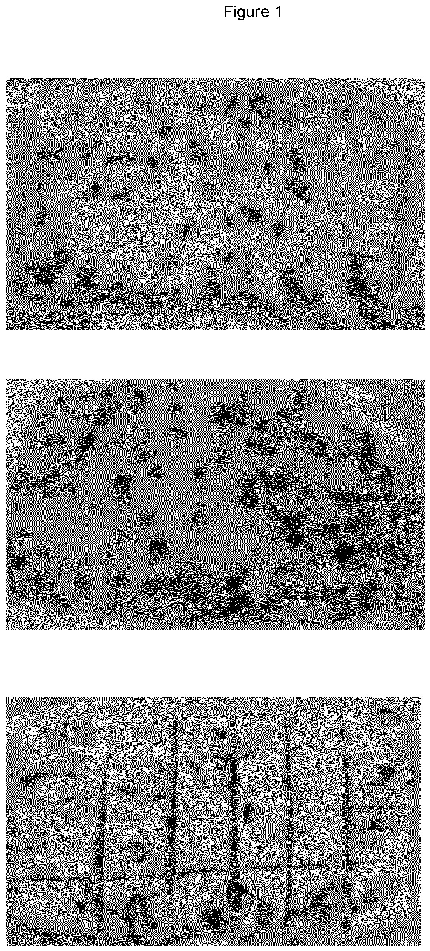

Figure 1 shows a reference short crust dough containing chocolate morsels prepared with solid fat (top photo), the dough prepared with liquid sunflower oil (center photo) and the dough with 60 % of the solid fat replaced by spray dried oil powder (bottom photo). The liquid sunflower oil dough does not keep its shape, and is very sticky and not workable. The oil powder dough has a similar texture to the reference dough.

### Example 10: Relative hardness

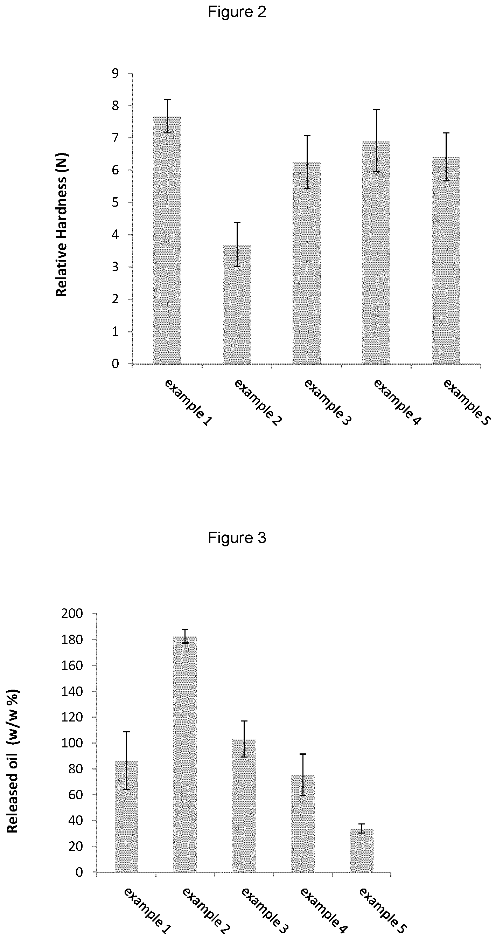

The relative hardness of the dough was measured by force response upon a displacement controlled compression test. The results are shown in Figure 2. A defined mass and shape of dough (30 g dough, cylindrically shaped with a diameter of 45 mm and a height of 17 mm) was compressed at 1 mm/s until a compression distance of 7 mm was reached. The maximum force obtained was recorded as a measure of dough hardness. The results show that the liquid oil dough is very soft and sticky (Example 2). The doughs prepared with the encapsulated oils (Examples 3 to 5) were softer than the reference dough (Example 1). However, they have a clearly improved texture compared to the liquid oil dough without any stickiness.

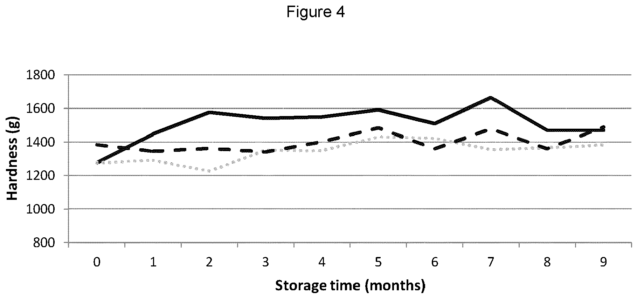

Products prepared from doughs of the invention were observed to have a similar biscuit texture to the reference product. In order to quantify the texture variance, the relative hardness of baked biscuits was determined by measuring peak compressive force at room temperature by compression probe and three point bend test using a TA-XT Texture Analyzer™ at 1 mm/sec test speed. The results are shown in Figure 4. The test was conducted during a shelf-life study. The results demonstrate that the biscuits prepared from doughs based on the oil powder (Example 7, dotted line, and Example 8, dashed line) have similar texture to biscuits prepared from the reference dough (Example 6, solid line).

### Example 11: Oil release

The tendency to release oil is an important characteristic of a dough. The dough is exposed to a certain level of mechanical stress during the manufacturing process. In certain cases raw doughs have to be stable for a given storage time. This is, for example, a prerequisite for doughs that are sold to the consumer as raw doughs. The dough should not be prone to release oil during the manufacturing procedure or during storage. The doughs according of the invention were observed to be much less prone to oil release than a corresponding liquid oil dough. In order to quantify the oil release tendency of a dough, the amount of released oil upon dough compression was determined. A dough compression test as described above in Example 10 was conducted. A cylindrical piece of dough (30 g dough, diameter 45 mm, height 17 mm) was placed on a filter paper. The dough was compressed until a total compression distance of 7 mm was reached. The probe was held at a constant height for a holding time of 120 s. The probe was then retracted at 1 mm/s. The amount of oil that was absorbed by the filter was gravimetrically determined. The results depicted in Figure 3 show that even under very slight mechanical stress, a liquid oil dough releases oil immediately (Example 2). The doughs prepared using encapsulated oils (Examples 3 to 5) showed a similar oiling out tendency to the reference dough (Example 1).

It is to be appreciated that although the invention has been described with reference to specific embodiments, variations and modifications may be made without departing from the scope of the invention as defined in the claims. Furthermore, where known equivalents exist to specific features, such equivalents are incorporated as if specifically referred to in this specification.

## Claims

1. A process for the preparation of an oil cream comprising at least 60 % oil by weight, water, and cross-linked protein, wherein the oil is encapsulated oil comprising an inner core of oil encapsulated in an outer shell of cross-linked protein, the process comprising the steps:
a) preparing an emulsion by homogenization of oil in an aqueous protein solution;
b) heating the emulsion at 70 to 90 °C for 5 to 15 minutes;
c) concentrating the emulsion by microfiltration or centrifugation or evaporation to reduce the water content of the oil cream to less than 35 % by weight.

2. The process according to claim 1, wherein the oil cream comprises at least 80 % by weight oil.

3. The process according to any one of claims 1 to 2, wherein the oil is a food grade oil obtained from plants or animals.

4. The process according to claim 3, wherein the oil is selected from the group consisting of olive oil, safflower oil, sunflower oil, fish oil, soy bean oil, soy oil, palm kernel oil, palm oil, coconut oil, hazelnut oil, flaxseed oil, rapeseed oil, primrose oil, linseed oil, corn oil, algae oil, cottonseed oil, essential oils, and any combination thereof.

5. The process according to any one of claims 1 to 4, wherein the protein is selected from the group consisting of whey protein, caseinate, egg albumen, lyzozyme, soy proteins, gluten, rice proteins, corn proteins, potato proteins, pea proteins, any kind of globular or random coil proteins, and any combination thereof.

6. The process according to any one of claims 1 to 5, wherein the oil contains at least one liposoluble compound selected from the group consisting of plant polyphenols, plant sterols, carotenoids, fatty acids, vitamins, aromas, antioxidants, and active ingredients.

7. An oil cream obtainable by the process according to one of the claims 1 to 6.

8. A dough comprising: between 0.5 to 40 % oil cream according to claim 7, between 0.5 and 40 % fat, between 4.5 and 35 % water, and between 30 and 65 % flour.

9. The dough according to claim 8 further comprising between 0.1 and 2 % of a leavening agent, between 0.1 and 10 % egg and between 0.1 and 40 % sugar.

10. The dough according to claim 8 or 9 comprising from 10 to 20 % oil cream, from 5 to 15 % fat, from 32 to 37 % flour and from 8 to 12 % water.

11. The dough according to one of the claims 8 to 10, which is selected from the group consisting of cookie dough, pie dough, croissant dough, puff pastry dough, wafer dough, loaf dough, biscuit dough, and pizza dough.

12. A baked product which has been prepared using the dough of any one of claims 8 to 11.

13. The baked product as claimed in claim 12, which is selected from the group comprising pizza, cookie, pie, croissant, pastry, wafer, loaf, and biscuit.

## Patentansprüche

1. Verfahren zur Herstellung einer Ölcreme, die mindestens 60 Gew.-% Öl, Wasser und vernetztes Protein umfasst, wobei das Öl eingekapseltes Öl ist, das einen inneren Kern aus Öl umfasst, das in einer äußeren Hülle von vernetztem Protein eingekapselt ist, wobei das Verfahren die folgenden Schritte umfasst:
a) Herstellen einer Emulsion durch Homogenisieren von Öl in einer wässrigen Proteinlösung;
b) 5- bis 15-minütiges Erwärmen der Emulsion bei 70 bis 90 °C;
c) Konzentrieren der Emulsion durch Mikrofiltration oder Zentrifugation oder Verdampfung, um den Wassergehalt der Ölcreme auf weniger als 35 Gew.-% zu reduzieren.

2. Verfahren nach Anspruch 1, wobei die Ölcreme mindestens 80 Gew.-% Öl umfasst.

3. Verfahren nach einem der Ansprüche 1 bis 2, wobei das Öl ein lebensmitteltaugliches Öl ist, das von Pflanzen oder Tieren erhalten wird.

4. Verfahren nach Anspruch 3, wobei das Öl ausgewählt ist aus der Gruppe bestehend aus Olivenöl, Distelöl, Sonnenblumenöl, Fischöl, Sojabohnenöl, Sojaöl, Palmkernöl, Palmöl, Kokosnussöl, Haselnussöl, Flachssamenöl, Rapssamenöl, Primelöl, Leinsamenöl, Maisöl, Algenöl, Baumwollsamenöl, essentiellen Ölen und einer beliebigen Kombination davon.

5. Verfahren nach einem der Ansprüche 1 bis 4, wobei das Protein ausgewählt ist aus der Gruppe bestehend aus Molkeprotein, Caseinat, Eiklar, Lyzozym, Sojaproteinen, Gluten, Reisproteinen, Maisproteinen, Kartoffelproteinen, Erbsenproteinen, einer beliebigen Art von globulären oder Random-Coil-Proteinen und einer beliebigen Kombination davon.

6. Verfahren nach einem der Ansprüche 1 bis 5, wobei das Öl mindestens eine fettlösliche Verbindung enthält, die ausgewählt ist aus der Gruppe bestehend aus Pflanzenpolyphenolen, Pflanzensterolen, Carotenoiden, Fettsäuren, Vitaminen, Aromastoffen, Antioxidanzien und Wirkbestandteilen.

7. Ölcreme, die durch das Verfahren nach einem der Ansprüche 1 bis 6 erhältlich ist.

8. Teig, umfassend: zwischen 0,5 bis 40 % Ölcreme nach Anspruch 7, zwischen 0,5 und 40 % Fett, zwischen 4,5 und 35 % Wasser und zwischen 30 und 65 % Mehl.

9. Teig nach Anspruch 8, ferner umfassend zwischen 0,1 und 2 % eines Gärmittels, zwischen 0,1 und 10 % Ei und zwischen 0,1 und 40 % Zucker.

10. Teig nach Anspruch 8 oder 9, umfassend von 10 bis 20 % Ölcreme, von 5 bis 15 % Fett, von 32 bis 37 % Mehl und von 8 bis 12 % Wasser.

11. Teig nach einem der Ansprüche 8 bis 10, der ausgewählt ist aus der Gruppe bestehend aus Plätzchenteig, Kuchenteig, Croissantteig, Blätterteig, Waffelteig, Brotteig, Gebäckteig und Pizzateig.

12. Gebackenes Produkt, das unter Verwendung des Teigs nach einem der Ansprüche 8 bis 11 hergestellt wurde.

13. Gebackenes Produkt nach Anspruch 12, das ausgewählt ist aus der Gruppe umfassend Pizza, Plätzchen, Kuchen, Croissant, Blätterteigware, Waffel, Brot und Gebäck.

## Revendications

1. Procédé de fabrication d'une crème à base d'huile comprenant au moins 60 % d'huile en poids, de l'eau et de la protéine réticulée, l'huile étant une huile encapsulée comprenant un noyau intérieur d'huile encapsulé dans une enveloppe extérieure de protéine réticulée, le procédé comprenant les étapes :
a) de préparation d'une émulsion par homogénéisation d'huile dans une solution de protéine aqueuse ;
b) de chauffage de l'émulsion de 70 à 90 °C pendant 5 à 15 minutes ;
c) de concentration de l'émulsion par microfiltration ou centrifugation ou évaporation afin de réduire la teneur en eau de la crème à base d'huile à moins de 35 % en poids.

2. Procédé selon la revendication 1, dans lequel la crème à base d'huile comprend au moins 80 % en poids d'huile.

3. Procédé selon l'une quelconque des revendications 1 à 2, dans lequel l'huile est une huile de qualité alimentaire obtenue à partir de végétaux ou d'animaux.

4. Procédé selon la revendication 3, dans lequel l'huile est choisie dans le groupe constitué d'huile d'olive, huile de carthame, huile de tournesol, huile de poisson, huile de graine de soja, huile de soja, huile de palmiste, huile de palme, huile de noix de coco, huile de noisette, huile de lin, huile de colza, huile d'onagre, huile de graine de lin, huile de maïs, huile d'algue, huile de coton, huiles essentielles et l'une quelconque combinaison de celles-ci.

5. Procédé selon l'une quelconque des revendications 1 à 4, dans lequel la protéine est choisie dans le groupe constitué de protéine de lactosérum, caséinate, albumine d'oeuf, lyzozyme, protéines de soja, gluten, protéines de riz, protéines de maïs, protéines de pomme de terre, protéines de pois, toutes sortes de protéines globulaires ou en hélice aléatoires, et l'une quelconque combinaison de celles-ci.

6. Procédé selon l'une quelconque des revendications 1 à 5, dans lequel l'huile contient au moins un composé liposoluble choisi dans le groupe constitué de polyphénols végétaux, stérols végétaux, caroténoïdes, acides gras, vitamines, arômes, antioxydants et principes actifs.

7. Crème à base d'huile obtenue par le procédé selon l'une des revendications 1 à 6.

8. Pâte comprenant : entre 0,5 et 40 % de crème à base d'huile selon la revendication 7, entre 0,5 et 40 % de matière grasse, entre 4,5 et 35 % d'eau et entre 30 et 65 % de farine.

9. Pâte selon la revendication 8 comprenant en outre entre 0,1 et 2 % d'une poudre à lever, entre 0,1 et 10 % d'oeuf et entre 0,1 et 40 % de sucre.

10. Pâte selon la revendication 8 ou 9 comprenant de 10 à 20 % de crème à base d'huile, de 5 à 15 % de matière grasse, de 32 à 37 % de farine et de 8 à 12 % d'eau.

11. Pâte selon l'une quelconque des revendications 8 à 10, qui est sélectionnée dans le groupe constituée de pâte à cookie, pâte à tarte, pâte à croissant, pâte feuilletée, pâte à gaufre, pâte à miche, pâte à biscuit et pâte à pizza.

12. Produit cuit au four ayant été préparé en utilisant la pâte selon l'une quelconque des revendications 8 à 11.

13. Produit cuit au four selon la revendication 12, qui est choisi dans le groupe comprenant pizza, cookie, tarte, croissant, pâtisserie, gaufre, miche et biscuit.
